# FASCICULE DE BREVET EUROPEEN

(11) **EP 3 481 679 B1**
(45) Date de publication et mention de la délivrance du brevet: **16.03.2022**
(21) Numéro de dépôt: 17746161.3
(22) Date de dépôt: 28.06.2017
(51) Int. Cl.: B60R 21/34, B62D 25/16

(54) **ENSEMBLE DE FIXATION D'UN ÉLÉMENT DE CARROSSERIE SUR UN VÉHICULE COMPRENANT UN FUSIBLE**
ANORDNUNG ZUR BEFESTIGUNG EINES BAUTEILS AN EINEM FAHRZEUG MIT EINER SICHERUNG
ASSEMBLY FOR ATTACHING A BODYWORK COMPONENT TO A VEHICLE COMPRISING A FUSE

(30) Priorité: 07.07.2016 FR 1656507
(43) Date de publication de la demande: 15.05.2019
(73) Titulaire: PSA Automobiles SA, 78300 Poissy (FR)
(72) Inventeur: ALLAIS, Benoit, 25600 NOMMAY (FR); MERMET, Gilles, 25260 SAINT MAURICE COLOMBIER (FR)
(86) Numéro de dépôt international: PCT/FR2017/051731
(87) Numéro de publication internationale: WO 2018/007720

(56) Documents cités:
- DE-U1-202008 007 671
- FR-A1- 2 895 962
- FR-A1- 2 913 393
- JP-A- 2009 255 713

## Description

L'invention a trait aux dispositifs permettant la fixation d'un élément de carrosserie sur un véhicule.

Les véhicules comprennent, en parure extérieure, des éléments de carrosserie ayant une fonction esthétique, une fonction d'identification de la marque et du véhicule, et également une fonction de protection.

En effet, les véhicules sont conçus pour réduire, voire éviter, les dommages causés aux individus, liés à un accident survenant avec le véhicule. Ainsi, les pièces de carrosserie des véhicules comportent un minimum de zones coupantes ou pointues pouvant blesser un piéton, lors d'un choc entre le véhicule et le piéton. Les pièces de carrosserie, généralement fixées à la caisse du véhicule, sont aptes à se déformer, déformant également la caisse du véhicule lorsque l'intensité du choc est importante, pour absorber un maximum d'énergie due au choc.

La déformation des seuls éléments de carrosserie pourrait suffire, lors d'un choc de faible intensité, à absorber l'énergie créée par le choc. Cependant, les éléments de carrosserie, solidaires de la caisse du véhicule, ont tendance, même lors d'un choc de faible intensité, à déformer la caisse du véhicule. Une déformation de la caisse engendre une augmentation du temps et des frais de réparation du véhicule.

Il est connu, afin d'éviter une déformation de la caisse du véhicule lorsque celle-ci n'est pas nécessaire, de fixer les éléments de carrosserie au véhicule par le biais d'un dispositif de liaison comprenant une pièce formant fusible mécanique.

Le document FR 2911106 divulgue un tel dispositif de liaison, solidaire d'un élément de carrosserie par le biais de clips de fixation. Le dispositif de liaison de ce document antérieur est également solidaire d'une structure avant du véhicule, par le biais de vis. Le dispositif comprend des pattes, munies de zones fusibles constituées par des amincissements réalisés sur l'épaisseur des pattes.

Un tel dispositif de liaison permet effectivement d'éviter la déformation de la structure avant, par rupture des zones fusibles. Cependant, les zones fusibles sont conçues pour se rompre quelle que soit la direction de la force appliquée sur la patte. Pour certaines applications, comme par exemple au niveau de l'aile du véhicule, les zones fusibles du dispositif de liaison doivent résister à une force appliquée suivant certaines directions, par exemple lorsqu'un individu s'appuie sur l'aile ou sur le bloc optique du véhicule relié à l'aile, et les zones fusibles doivent rompre lorsque la force est appliquée suivant d'autres directions.

Le document FR 2895962 décrit un ensemble de fixation conforme au préambule de la revendication

Un objectif est de proposer un dispositif de liaison d'un élément de carrosserie sur un véhicule, ce dispositif étant apte à rompre lorsque qu'une force est appliquée sur l'élément de carrosserie et étant apte à résister à une force appliquée sur l'élément de carrosserie suivant au moins une direction particulière.

A ces fins, il est proposé, en premier lieu, un ensemble de fixation d'un élément de carrosserie à la caisse d'un véhicule, comportant un support intermédiaire, destiné à recevoir le premier élément, un dispositif de liaison sur lequel est fixé le support intermédiaire, ce dispositif de liaison comprenant une première zone de liaison recevant des moyens de fixation fixant le dispositif de liaison au support intermédiaire, une deuxième zone de liaison recevant des moyens de fixation pour fixer le dispositif de liaison à la caisse du véhicule, un fusible destiné à rompre le dispositif de liaison selon une zone de rupture définie par le fusible, séparant la première zone du dispositif de liaison sous l'effet d'une force appliquée par le support intermédiaire sur la première zone, remarquable en ce que le dispositif comporte une surface de contact contre laquelle s'appuie le support intermédiaire, ladite surface de contact étant perpendiculaire à une première direction et s'étendant au moins en dehors de la première zone, empêchant la rupture du dispositif de liaison lorsque une force est appliquée suivant la première direction et un premier sens primaire de ladite première direction orienté du support intermédiaire vers le dispositif de liaison. Le dispositif de fixation comprend une cale supportant le support intermédiaire suivant un premier sens secondaire d'une deuxième direction, différente de la première direction, cette cale étant en dehors de la zone de rupture et de la première zone, et bloquant le déplacement du support intermédiaire par rapport au dispositif suivant le premier sens secondaire de la deuxième direction, afin d'empêcher la rupture du dispositif de liaison lorsque la force appliquée par le support intermédiaire sur le dispositif de fixation est suivant le premier sens secondaire de la deuxième direction.

La surface de contact du dispositif de liaison avec l'élément de carrosserie empêche la rupture du dispositif lorsque la force est appliquée suivant le premier sens primaire de la première direction. La force peut être appliquée par exemple via les moyens de fixation liant le support intermédiaire au dispositif de fixation.

Diverses caractéristiques supplémentaires peuvent être prévues, seules ou en combinaison :
- le fusible comprend une patte délimitant la zone de rupture, la patte étant disposée suivant une troisième direction différente de la première direction et de la deuxième direction, de sorte à empêcher la rupture du dispositif lorsque la force est appliquée par le support intermédiaire suivant la troisième direction ;
- la cale comprend un premier élément en contact avec un premier bord primaire d'une première lumière du support intermédiaire, bloquant le déplacement du support intermédiaire par rapport au dispositif de fixation suivant un premier sens tertiaire de la troisième direction, différente de la première direction et de la deuxième direction, de sorte à empêcher la rupture du dispositif lorsque la force est appliquée suivant ce premier sens tertiaire de la troisième direction.
- le premier élément est configuré pour être en contact avec un deuxième bord primaire de la première lumière, bloquant le déplacement du support intermédiaire par rapport au dispositif suivant un deuxième sens tertiaire de la troisième direction, de sorte à empêcher la rupture du dispositif lorsque la force est appliquée suivant ce deuxième sens tertiaire de la troisième direction, et à indexer le dispositif de liaison avec le support intermédiaire suivant la troisième direction, le deuxième sens tertiaire étant opposé au premier sens tertiaire ;
- la cale comprend un deuxième élément en contact avec un premier côté du support intermédiaire, bloquant le déplacement du support intermédiaire par rapport au dispositif suivant un premier sens tertiaire d'une troisième direction, différente de la première direction et de la deuxième direction, de sorte à empêcher la rupture du dispositif lorsque la force est appliquée suivant ce premier sens tertiaire d'une troisième direction, différente de la première direction et de la deuxième direction ;
- la cale comprend un troisième élément en contact avec un deuxième côté du support intermédiaire, bloquant le déplacement du support intermédiaire par rapport au dispositif suivant un deuxième sens tertiaire de la troisième direction, de sorte à empêcher la rupture du dispositif lorsque la force est appliquée suivant un deuxième sens tertiaire de la troisième direction, et à indexer le dispositif de liaison avec le support intermédiaire suivant la troisième direction, le deuxième sens tertiaire étant opposé au premier sens tertiaire ;
- la cale comprend une excroissance en contact avec un premier bord secondaire d'une deuxième lumière du support intermédiaire, bloquant le déplacement du support intermédiaire par rapport au dispositif de fixation suivant un premier sens tertiaire d'une troisième direction, différente de la première direction et de la deuxième direction, de sorte à empêcher la rupture du dispositif lorsque la force est appliquée suivant ce premier sens tertiaire de la troisième direction ;
- l'excroissance est en contact avec un deuxième bord secondaire de la deuxième lumière, bloquant le déplacement du support intermédiaire par rapport au dispositif de fixation suivant un deuxième sens tertiaire de la troisième direction, le deuxième sens tertiaire étant opposé au premier sens tertiaire, de sorte à empêcher la rupture dudit dispositif lorsque la force est appliquée suivant ce deuxième sens tertiaire de la troisième direction, et à indexer le dispositif de liaison avec le support intermédiaire suivant la troisième direction ;
- le support intermédiaire est une partie de l'élément de carrosserie comportant la pièce de carrosserie à fixer à l'élément de la caisse.

Il est proposé, en second lieu, un véhicule comprenant un dispositif de liaison tel que présenté ci-dessus. Dans une variante de réalisation, la pièce de carrosserie est un panneau de carrosserie.

Dans une autre variante, la pièce de carrosserie du véhicule est une aile avant du véhicule.

Dans une autre variante, l'élément de la caisse est un brancard avant.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'un véhicule comprenant un support intermédiaire et un dispositif de liaison d'une aile à un élément de la caisse du véhicule ;
- la figure 2 est une vue schématique en perspective du dispositif de liaison, du support intermédiaire et de l'élément de la caisse du véhicule selon un premier mode de réalisation ;
- la figure 3 est une vue schématique en perspective du dispositif de liaison, selon un deuxième mode de réalisation ;
- la figure 4 est une vue schématique en perspective du dispositif de liaison, du support intermédiaire et de l'élément de la caisse du véhicule, selon le deuxième mode de réalisation ;
- la figure 5 est une vue schématique de côté du dispositif de liaison et du support intermédiaire, selon un troisième mode de réalisation ;
- la figure 6 est une vue schématique de côté du dispositif de liaison et du support intermédiaire, selon un quatrième mode de réalisation ;
- la figure 7 est une vue schématique de côté du dispositif de liaison et du support intermédiaire, selon un cinquième mode de réalisation.

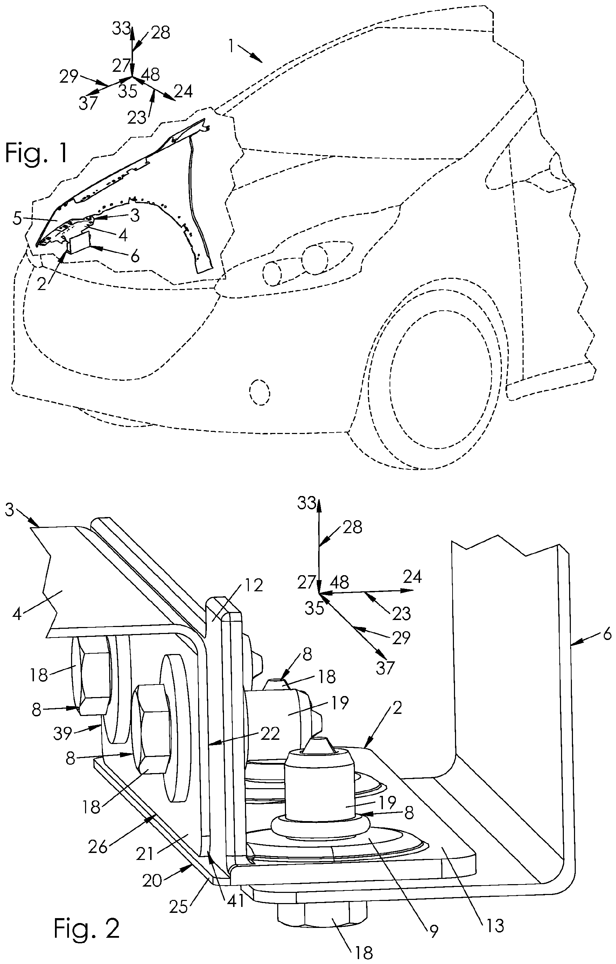

Sur la figure 1 est représenté un véhicule 1 comprenant ensemble de fixation comportant un dispositif 2 de liaison et un support 4 intermédiaire. L'ensemble de fixation fixe une pièce de carrosserie 5 à un élément de la caisse 6 du véhicule. Dans la figure 1, la pièce de carrosserie 5 est un panneau de carrosserie formant l'aile avant du véhicule 1. Elle est fixée au support 4 intermédiaire. Le dispositif 2 de liaison est fixé à l'élément de la caisse 6 du véhicule 1, comme par exemple à un longeron ou une doublure d'aile.

Selon les modes de réalisation représentés, le support 4 intermédiaire et la pièce de carrosserie 5 sont solidaires entre eux, et forment un élément 3 de carrosserie.

Selon les modes de réalisation représentés, l'ensemble de fixation est fixé à l'élément de la caisse 6 du véhicule 1 et à la pièce de carrosserie 5.

Selon des modes de réalisations différents, l'élément 3 de carrosserie, comportant le support 4 intermédiaire et la pièce de carrosserie 5, forme une pièce unique.

Dans la description ci-dessous, le dispositif 2 de liaison, l'élément 3 de carrosserie et l'élément de la caisse 6 sont décrits assemblés entre eux et solidaires du véhicule 1.

Le dispositif 2 de liaison comprend une première zone 7 de liaison configurée pour recevoir des moyens 8 de fixation, pour fixer le dispositif 2 de liaison à l'élément 3 de carrosserie.

Le dispositif 2 de liaison comprend également une deuxième zone 9 de liaison, configurée pour recevoir des moyens 8 de fixation, pour fixer le dispositif 2 de liaison à l'élément de la caisse 6.

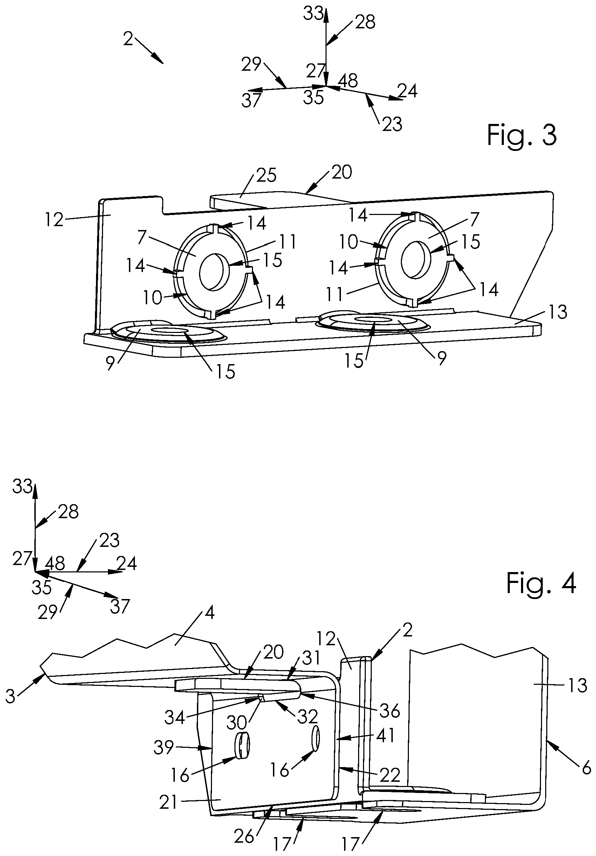

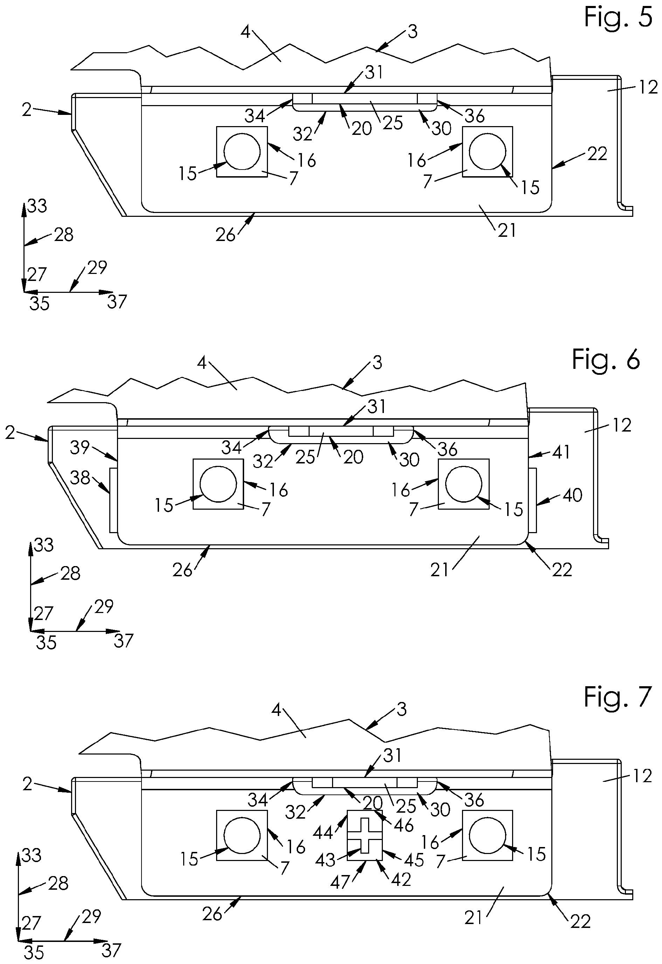

Afin de procurer une meilleure lisibilité aux dessins, les moyens 8 de fixation ne sont pas représentés sur les figures 4, 5, 6 et 7, et l'élément de la caisse 6 n'est pas illustré sur les figures 5, 6 et 7.

Le dispositif 2 de liaison comprend un fusible 10, définissant une zone 11 de rupture. La zone 11 de rupture et la première zone 7 de liaison forment une intersection.

Selon les modes de réalisation représentés, le dispositif 2 comprend une première paroi 12, comportant deux premières zones 7 avec chacune un fusible 10, et une deuxième paroi 13 comportant deux deuxièmes zones 9 de liaison. Selon les modes de réalisations représentés, la première paroi 12 et la deuxième paroi 13 sont sensiblement perpendiculaires.

Selon les modes de réalisation illustrés, chaque première zone 7 est de forme circulaire, située dans un trou circulaire de la première paroi 12 de diamètre supérieur, et relié à ladite paroi par quatre pattes 14. Chaque fusible 10 est donc formé par les quatre pattes 14 reliant la première zone 7 à la première paroi 12. La zone 11 de rupture du fusible 10 est défini par l'espace entre la première zone 7 et le reste la paroi 12, ainsi que par les pattes 14.

Selon des modes de réalisation différents, les fusibles 10 comprennent un nombre différent de pattes 14.

En variante, chaque première zone 7 est reliée à la première paroi 12 par une zone d'épaisseur réduite créant une zone frangible. Cette zone frangible forme le fusible 10, et définit la zone 11 de rupture. En autre variante, la zone frangible 10 est réalisée par une matière plus fragile que la paroi 12.

Selon les modes de réalisations illustrés, les premières zones 7 de liaison et les deuxièmes zones 9 de liaison comprennent chacune un perçage 15 respectivement aptes à coïncider avec des trous 16 du support 4 intermédiaire et avec des ouvertures 17 de l'élément de la caisse 6.

Les moyens 8 de fixation comprennent chacun une vis 18 et un écrou 19 configurés pour coopérer avec les perçages 15, les trous 16 et les ouvertures 17.

Selon des modes de réalisation différents, les moyens 8 de fixation sont des clips, de la colle ou des rivets.

Le dispositif 2 de liaison comprend une cale 20. Selon les modes de réalisation représentés, la cale 20 est disposée en saillie, sensiblement perpendiculairement à la première paroi 12.

Le support 4 intermédiaire comprend un pan 21 comportant les trous 16. La première paroi 12 du dispositif 2 définit une surface 22 de contact contre lequel s'appuie le pan 21 du support 4 intermédiaire. Cette surface de contact 22 s'étend au moins en dehors des premières zones 7 de liaison. La surface 22 de contact est perpendiculaire à la première direction 23 afin de bloquer la rupture du dispositif 2 lorsqu'une force est appliquée, suivant un premier sens 24 primaire de la première direction 23. Ce premier sens primaire 24 de la première direction 23 est dirigé du support 4 intermédiaire vers le dispositif 2 de liaison.

Dans une variante, la surface 22 de contact et un projeté, suivant une première direction 23, de la zone 11 de rupture forment une intersection, de sorte à bloquer la rupture du dispositif 2 lorsqu'une force est appliquée, suivant un premier sens 24 primaire de la première direction 23.

Ainsi, lorsque le support 4 intermédiaire applique un effort sur le dispositif 2 de liaison, suivant cette première direction 23 et dirigé du support 4 intermédiaire vers le dispositif 2 de liaison, le contact entre le pan 21 et la surface 22 de contact empêche tout mouvement relatif dans ce sens et cette direction entre ledit pan 21 et ladite surface 22. Les fusibles ne peuvent pas rompre. Un tel effort peut résulter par exemple d'un effort s'appliquant sur la pièce de carrosserie 5 au cours d'un choc.

Selon les modes de réalisation représentés, les deux zones 11 de rupture définies par les deux fusibles 10 de la première paroi 12 s'étendent dans la surface 22 de contact.

Selon un mode de réalisation représenté sur la figure 4, un des trous 16 du support 4 intermédiaire présente une forme sensiblement identique à la forme des vis 18. La coopération de la vis 18 et du trou 16 permet ainsi un indexage rapide du support 4 intermédiaire, par rapport au dispositif 2 de liaison.

Selon le premier mode de réalisation, représenté en figure 2, un premier élément 25 de la cale 20 est en contact avec un côté 26 inférieur du pan 21 du support 4 intermédiaire. Le premier élément 25 empêche ainsi la rupture du dispositif 2 lorsque la force est appliquée suivant un premier sens 27 secondaire d'une deuxième direction 28 différente de la première direction 23.

Selon le premier et le deuxième mode de réalisation, représentés en figures 2 à 4, deux des quatre pattes 14 des fusibles 10 sont alignées suivant une troisième direction 29, comme représenté sur la figure 3, la troisième direction 29 étant différente de la première direction 23 et de la deuxième direction 28. Ces pattes 14 empêchent ainsi la rupture du dispositif 2 lorsque la force est appliquée suivant la troisième direction 29.

Selon quatre modes de réalisation respectivement représentés sur les figures 4, 5, 6 et 7, le support 4 intermédiaire comprend une première lumière 30 traversée par le premier élément 25 de la cale 20. Le premier élément 25 est en appui contre un bord 31 supérieur primaire de la première lumière 30. Le premier élément 25 empêche ainsi la rupture du dispositif 2, lorsque la force est appliquée suivant le premier sens 27 secondaire de la deuxième direction 28, en bloquant le mouvement relatif du support 4 intermédiaire par rapport au dispositif 2 dans le sens de cette force.

Selon un mode de réalisation non représenté, le premier élément 25 est en appui contre un bord 32 inférieur primaire de la première lumière 30. Le premier élément 25 empêche ainsi la rupture du dispositif 2 lorsque la force est appliquée suivant un deuxième sens 33 secondaire de la deuxième direction 28, le deuxième sens 33 secondaire étant opposé au premier sens 27 secondaire, par blocage du mouvement relatif du support 4 intermédiaire par rapport au dispositif 2 dans cette direction et ce sens.

Selon un mode de réalisation non représenté, le premier élément 25 est en appui contre le bord 31 supérieur primaire et contre le bord 32 inférieur primaire de la première lumière 30 permettant, à la fois, d'empêcher la rupture du dispositif 2, lorsque la force est appliquée suivant la deuxième direction 28, et d'indexer rapidement le support 4 intermédiaire par rapport au dispositif 2 de liaison.

Selon les trois modes de réalisation des figures 5 à 7, les trous 16 du support 4 intermédiaire ont une dimension générale supérieure à la dimension générale des perçages 15 du dispositif 2 de liaison, afin de permettre une plus grande tolérance lors de la fabrication du support 4 intermédiaire et du dispositif 2.

Selon le troisième mode de réalisation, le premier élément 25 de la cale 20 est en appui contre un premier bord 34 primaire de la première lumière 30 du support 4 intermédiaire. Le premier élément 25 empêche ainsi la rupture du dispositif 2, lorsque la force est appliquée suivant un premier sens 35 tertiaire de la troisième direction 29. Avantageusement, le premier élément 25 de la cale 20 est en appui contre un deuxième bord 36 primaire de la première lumière 30. Le premier élément 25 permet ainsi, à la fois, d'empêcher la rupture du dispositif 2 lorsque la force est appliquée suivant un deuxième sens 37 tertiaire de la troisième direction 29, et d'indexer rapidement le support 4 intermédiaire par rapport au dispositif 2 de liaison, le deuxième sens 37 tertiaire étant opposé au premier sens 35 tertiaire.

Selon le quatrième mode de réalisation, représenté en figure 6, la cale 20 comprend un deuxième élément 38 en appui contre un premier côté 39 du support 4 intermédiaire. Le deuxième élément 38 empêche ainsi la rupture du dispositif 2, lorsque la force est appliquée suivant le premier sens 35 tertiaire de la troisième direction 29. Avantageusement, la cale 20 comprend un troisième élément 40, en appui contre un deuxième côté 41 du support 4 intermédiaire. Le troisième élément 40 permet ainsi, à la fois, d'empêcher la rupture du dispositif 2, lorsque la force est appliquée suivant le deuxième sens 37 tertiaire de la troisième direction 29, et d'indexer rapidement le support 4 intermédiaire par rapport au dispositif 2 de liaison.

Selon le cinquième mode de réalisation, représenté en figure 7, le pan 21 du support 4 intermédiaire comprend une deuxième lumière 42 traversée par une excroissance formant un quatrième élément 43 de la cale 20. Le quatrième élément 43 est en appui contre un premier bord 44 secondaire de la deuxième lumière 42. Le quatrième élément 43 empêche ainsi la rupture du dispositif 2, lorsque la force est appliquée suivant le premier sens 35 tertiaire de la troisième direction 29. Avantageusement, le quatrième élément 43 est en appui contre un deuxième bord 45 secondaire de la deuxième lumière 42. Le quatrième élément 43 permet ainsi, à la fois, d'empêcher la rupture du dispositif 2, lorsque la force est appliquée suivant le deuxième sens 37 tertiaire de la troisième direction 29, et d'indexer rapidement le support 4 intermédiaire par rapport au dispositif 2 de liaison.

Selon un mode de réalisation non représenté, le quatrième élément 43 est en appui contre un bord 46 supérieur secondaire de la deuxième lumière 42. Le quatrième élément 43 empêche ainsi la rupture du dispositif 2, lorsque la force est appliquée suivant le premier sens 27 secondaire de la deuxième direction 28. Avantageusement, le quatrième élément 43 est en appui contre un bord 47 inférieur secondaire de la deuxième lumière 42. Le quatrième élément 43 permet ainsi, à la fois, d'empêcher la rupture du dispositif 2 lorsque la force est appliquée suivant le deuxième sens 33 secondaire de la deuxième direction 28, et d'indexer rapidement le support 4 intermédiaire par rapport au dispositif 2 de liaison.

Selon les modes de réalisation représentés, la première direction 23, la deuxième direction 28 et la troisième direction 29 sont perpendiculaires deux à deux et définissent, par rapport au véhicule 1, un repère orthogonal, à savoir :
- la troisième direction 29, définissant une direction longitudinale, horizontale, confondue avec la direction générale de déplacement du véhicule 1,
- la première direction 23, définissant une direction transversale, horizontale, qui avec la troisième direction 29 définit un plan horizontal,
- la deuxième direction 28, définissant une direction verticale, perpendiculaire au plan horizontal.

Selon un mode de réalisation préféré, le dispositif 2 de liaison est en matériau polymère.

Le premier élément 25, le deuxième élément 38 et le troisième élément 40 en combinaison ainsi que le quatrième élément 43 de la cale 20 permettent un indexage rapide du support 4 intermédiaire, par rapport au dispositif 2 de liaison.

La surface 22 de contact du dispositif 2 de liaison avec l'élément 3 de carrosserie empêche la rupture du dispositif 2, lorsque la force est appliquée suivant le premier sens 24 primaire de la première direction 23.

Le premier élément 25 et le quatrième élément 43 de la cale 20 ainsi que les pattes 14 des fusibles 10 du dispositif 2 de liaison empêchent la rupture du dispositif 2, lorsque la force est appliquée suivant le premier sens 27 secondaire et le deuxième sens 33 secondaire de la deuxième direction 28.

Le premier élément 25, le deuxième élément 38 et le troisième élément 40 de la cale 20 du dispositif 2 de liaison empêchent la rupture du dispositif 2, lorsque la force est appliquée suivant le premier sens 35 tertiaire et le deuxième sens 37 tertiaire de la troisième direction 29.

Les différentes combinaisons du premier élément 25, du deuxième élément 38, du troisième élément 40 et du quatrième élément 43 définissent le ou les sens dans le ou les directions suivant lesquels une force appliquée sur le dispositif 2 de liaison entraîne la rupture du dispositif 2.

Selon un mode de réalisation préféré, le fusible 10 rompt uniquement lorsque la force est appliquée suivant un deuxième sens 48 primaire de la première direction 23, le deuxième sens 48 primaire étant opposé au premier sens 24 primaire.

Avantageusement, l'élément 3 de carrosserie, comprenant le support 4 intermédiaire et la pièce de carrosserie 5, et le dispositif 2 de liaison sont livrés assemblés, de sorte que l'ensemble soit apte à être monté directement sur l'élément de la caisse 6 du véhicule 1, comme par exemple sur un brancard avant.

## Revendications

1. Ensemble de fixation d'une pièce de carrosserie (5) à un élément de la caisse (6) d'un véhicule, comportant :
- un support (4) intermédiaire, destiné à recevoir la pièce de carrosserie (5),
- un dispositif (2) de liaison sur lequel est fixé le support (4) intermédiaire, ce dispositif (2) de liaison comprenant une première zone (7) de liaison recevant des moyens (8) de fixation fixant le dispositif (2) de liaison au support (4) intermédiaire, une deuxième zone (9) de liaison recevant des moyens (8) de fixation pour fixer le dispositif (2) de liaison à l'élément de la caisse (6) du véhicule (1), un fusible (10) destiné à rompre le dispositif (2) de liaison selon une zone (11) de rupture définie par le fusible (10), séparant la première zone (7) du dispositif (2) de liaison, sous l'effet d'une force appliquée par le support (4) intermédiaire sur la première zone (7),
le dispositif (2) comportant une surface (22) de contact contre laquelle s'appuie le support (4) intermédiaire, perpendiculaire à une première direction (23), la surface (22) de contact s'étendant au moins en dehors de la première zone (7), la surface (22) de contact empêchant la rupture du dispositif (2) de liaison lorsque une force est appliquée par le support intermédiaire (4) suivant la première direction (23) et un premier sens (24) primaire de ladite première direction (23) orienté du support (4) intermédiaire vers le dispositif (2) de liaison, **caractérisé en ce que** le dispositif (2) de fixation comprend une cale (20) supportant le support (4) intermédiaire suivant un premier sens (27) secondaire d'une deuxième direction (28), différente de la première direction (23), cette cale (20) étant en dehors de la zone (11) de rupture et de la première zone (7), et bloquant le déplacement du support (4) intermédiaire par rapport au dispositif (2) suivant le premier sens (27) secondaire de la deuxième direction (28), afin d'empêcher la rupture du dispositif (2) de liaison lorsque la force appliquée par le support (4) intermédiaire sur le dispositif (2) de fixation est suivant le premier sens (27) secondaire de la deuxième direction (28).

2. Ensemble de fixation suivant la revendication 1 **caractérisé en ce que** le fusible (10) comprend une patte (14) délimitant la zone (11) de rupture, la patte (14) étant disposée suivant une troisième direction (29), différente de la première direction (23) et de la deuxième direction (28), de sorte à empêcher la rupture du dispositif (2) lorsque la force est appliquée par le support (4) intermédiaire suivant la troisième direction (29).

3. Ensemble de fixation suivant la revendication précédente, **caractérisé en ce que** la cale (20) comprend un premier élément (25) en contact avec un premier bord (34) primaire d'une première lumière (30) du support (4) intermédiaire, bloquant le déplacement du support (4) intermédiaire par rapport au dispositif (2) de fixation suivant un premier sens (35) tertiaire de la troisième direction (29), différente de la première direction (23) et de la deuxième direction (28), de sorte à empêcher la rupture du dispositif (2) lorsque la force est appliquée suivant ce premier sens (35) tertiaire de la troisième direction (29).

4. Ensemble de fixation selon la revendication précédente, **caractérisé en ce que** le premier élément (25) est configuré pour être en contact avec un deuxième bord (36) primaire de la première lumière (30), bloquant le déplacement du support (4) intermédiaire par rapport au dispositif (2) suivant un deuxième sens (37) tertiaire de la troisième direction (29), de sorte à empêcher la rupture du dispositif (2) lorsque la force est appliquée suivant ce deuxième sens (37) tertiaire de la troisième direction (29), et à indexer le dispositif (2) de liaison avec le support (4) intermédiaire suivant la troisième direction (29), le deuxième sens (37) tertiaire étant opposé au premier sens (35) tertiaire.

5. Ensemble de fixation selon l'une quelconque des revendications de 1 à 4, **caractérisé en ce que** la cale (20) comprend un deuxième élément (38) en contact avec un premier côté (39) du support (4) intermédiaire, bloquant le déplacement du support (4) intermédiaire par rapport au dispositif (2) suivant un premier sens (35) tertiaire d'une troisième direction (29), différente de la première direction (23) et de la deuxième direction (28), de sorte à empêcher la rupture du dispositif (2) lorsque la force est appliquée suivant ce premier sens (35) tertiaire d'une troisième direction (29), différente de la première direction (23) et de la deuxième direction (28).

6. Ensemble de fixation selon la revendication précédente, **caractérisé en ce que** la cale (20) comprend un troisième élément (40) en contact avec un deuxième côté (41) du support (4) intermédiaire, bloquant le déplacement du support (4) intermédiaire par rapport au dispositif (2) suivant un deuxième sens (37) tertiaire de la troisième direction (29), de sorte à empêcher la rupture du dispositif (2) lorsque la force est appliquée suivant un deuxième sens (37) tertiaire de la troisième direction (29), et à indexer le dispositif (2) de liaison avec le support (4) intermédiaire suivant la troisième direction (29), le deuxième sens (37) tertiaire étant opposé au premier sens (35) tertiaire.

7. Ensemble de fixation selon l'une quelconque des revendications 1 et 2, **caractérisé en ce que** la cale (20) comprend une excroissance (43) en contact avec un premier bord (44) secondaire d'une deuxième lumière (42) du support (4) intermédiaire, bloquant le déplacement du support (4) intermédiaire par rapport au dispositif (2) de fixation suivant un premier sens (35) tertiaire d'une troisième direction (29), différente de la première direction (23) et de la deuxième direction (28), de sorte à empêcher la rupture du dispositif (2) lorsque la force est appliquée suivant ce premier sens (35) tertiaire de la troisième direction (29).

8. Ensemble de fixation selon la revendication précédente, **caractérisé en ce que** l'excroissance (43) est en contact avec un deuxième bord (45) secondaire de la deuxième lumière (42), bloquant le déplacement du support (4) intermédiaire par rapport au dispositif (2) de fixation suivant un deuxième sens (37) tertiaire de la troisième direction (29), le deuxième sens (37) tertiaire étant opposé au premier sens (35) tertiaire, de sorte à empêcher la rupture dudit dispositif (2) lorsque la force est appliquée suivant ce deuxième sens (37) tertiaire de la troisième direction (29), et à indexer le dispositif (2) de liaison avec le support (4) intermédiaire suivant la troisième direction (29).

9. Ensemble de fixation selon l'une quelconque des revendications précédentes, **caractérisé en ce que** le support (4) intermédiaire est une partie d'un l'élément (3) de carrosserie comportant la pièce de carrosserie (5) à fixer à l'élément de la caisse (6).

10. Véhicule (1) comprenant un ensemble de fixation selon l'une quelconque des revendications précédentes.

11. Véhicule (1) suivant la revendication précédente **caractérisé en ce que** la pièce de carrosserie (5) du véhicule est un panneau de carrosserie.

12. Véhicule (1) suivant la revendication précédente **caractérisé en ce que** la pièce de carrosserie (5) du véhicule est une aile avant du véhicule.

13. Véhicule (1) suivant la revendication précédente **caractérisé en ce que** l'élément de la caisse du véhicule (6) est un brancard avant.

## Patentansprüche

1. Anordnung zur Befestigung eines Karosserieteils (5) an einem Teil des Wagenkastens (6) eines Fahrzeugs, mit:
- einem Zwischenträger (4) zur Aufnahme des Karosserieteils (5),
- eine Verbindungsvorrichtung (2), an der der Zwischenträger (4) befestigt ist, wobei die Verbindungsvorrichtung (2) einen ersten Verbindungsbereich (7), der Befestigungsmittel (8) aufnimmt, die die Verbindungsvorrichtung (2) an dem Zwischenträger (4) befestigen, einen zweiten Verbindungsbereich (9), der Befestigungsmittel (8) aufnimmt, um die Verbindungsvorrichtung (2) an dem Aufbauteil (6) des Fahrzeugs (1) zu befestigen, und eine Sicherung (10) zum Brechen der Verbindungsvorrichtung (2) in einer durch die Sicherung (10) definierten Sollbruchstelle (11) aufweist, die den ersten Bereich (7) trennt Verbindungsvorrichtung (2), unter der Wirkung einer von dem Zwischenträger (4) auf den ersten Bereich (7) ausgeübten Kraft,
Vorrichtung (2) mit einer Kontaktfläche (22), an der sich der Zwischenträger (4) senkrecht zu einer ersten Richtung (23) abstützt, wobei sich die Kontaktfläche (22) zumindest außerhalb des ersten Bereiches (7) erstreckt, wobei die Kontaktfläche (22) ein Brechen der Verbindungsvorrichtung (2) verhindert, wenn eine Kraft durch den Zwischenträger (4) in der ersten Richtung (23) und eine erste Primärrichtung (24) der ersten Richtung (23), die vom Zwischenträger (4) zur Verbindungsvorrichtung (2) gerichtet ist, ausgeübt wird, **dadurch gekennzeichnet, dass** die Verbindungsvorrichtung (2) einen Keil (20) umfasst, der den Zwischenträger (4) in einer ersten Nebenrichtung (27) einer zweiten Richtung (28) trägt, die sich von der ersten Richtung (23) unterscheidet, wobei der Keil (20) außerhalb des Sollbruchbereichs (11) liegt und die Bewegung des Zwischenträgers (4) relativ zu der Vorrichtung (2) in der ersten Nebenrichtung (27) der zweiten Richtung (28) blockiert, um ein Brechen der Verbindungsvorrichtung (2) zu verhindern, wenn die Kraft, die der Zwischenträger (4) auf die Befestigungsvorrichtung (2) ausübt, in der ersten Nebenrichtung (27) liegt die zweite Richtung (28).

2. Befestigungsanordnung nach Anspruch 1, **dadurch gekennzeichnet, dass** die Sicherung (10) eine Lasche (14) umfasst, die die Sollbruchzone (11) begrenzt, wobei die Lasche (14) in einer dritten Richtung (29) angeordnet ist, die sich von der ersten Richtung (23) und der zweiten Richtung (28) unterscheidet, sodass ein Brechen der Vorrichtung (2) verhindert wird, wenn die Kraft durch den Zwischenträger (4) in der dritten Richtung (29) aufgebracht wird.

3. Befestigungsanordnung nach dem vorhergehenden Anspruch, **dadurch gekennzeichnet, dass** der Keil (20) ein erstes Element (25) umfasst, das in Kontakt mit einer ersten Primärkante (34) einer ersten Öffnung (30) des Zwischenträgers (4) steht, die die Verschiebung des Zwischenträgers (4) relativ zu der Befestigungsvorrichtung (2) in einer ersten Tertiärrichtung (35) der dritten Richtung (29) blockiert, die sich von der ersten Richtung (23) und der zweiten Richtung (28) unterscheidet, sodass ein Bruch der Vorrichtung (2) verhindert wird, wenn die Kraft in dieser ersten Tertiärrichtung (35) der dritten Richtung ausgeübt wird Lenkung (29).

4. Befestigungsanordnung nach dem vorhergehenden Anspruch, **dadurch gekennzeichnet, dass** das erste Element (25) so konfiguriert ist, dass es mit einem zweiten primären Rand (36) der ersten Öffnung (30) in Kontakt steht, der die Bewegung des Halters (4) zwischen der Vorrichtung (2) in einer zweiten Tertiärrichtung (37) der dritten Richtung (29) blockiert, sodass das Brechen der Vorrichtung (2) verhindert wird, wenn die Kraft in dieser zweiten Tertiärrichtung (37) der dritten Richtung (29) ausgeübt wird, und die Verbindungsvorrichtung (2) mit dem Halter (4) in der dritten Richtung (29) indexiert wird wobei die zweite Tertiärrichtung (37) der ersten Tertiärrichtung (35) entgegengesetzt ist.

5. Befestigungsanordnung nach einem der Ansprüche 1 bis 4, **dadurch gekennzeichnet, dass** der Keil (20) ein zweites Element (38) umfasst, das in Kontakt mit einer ersten Seite (39) des Zwischenträgers (4) steht, das die Bewegung des Zwischenträgers (4) relativ zu der Vorrichtung (2) in einer ersten Tertiärrichtung (35) einer dritten Richtung (29), die sich von der ersten Richtung (23) und der zweiten Richtung (28) unterscheidet, blockiert, sodass ein Bruch der Vorrichtung (2) verhindert wird, wenn die Kraft in dieser ersten Tertiärrichtung (35) einer dritten Richtung (2) ausgeübt wird 9), die sich von der ersten Richtung (23) und der zweiten Richtung (28) unterscheidet.

6. Befestigungsanordnung nach dem vorhergehenden Anspruch, **dadurch gekennzeichnet, dass** der Keil (20) ein drittes Element (40) umfasst, das in Kontakt mit einer zweiten Seite (41) des Zwischenträgers (4) steht und die Bewegung des Zwischenträgers (4) relativ zu der Vorrichtung (2) in einer zweiten Tertiärrichtung (37) der dritten Richtung (29) blockiert, sodass das Brechen der Vorrichtung (2) verhindert wird, wenn die Kraft in einer zweiten Tertiärrichtung (37) der dritten Richtung (29) ausgeübt wird, und die Verbindungsvorrichtung (2) mit dem Zwischenträger (4) in der dritten Richtung (2) indexiert 9), wobei die zweite Tertiärrichtung (37) der ersten Tertiärrichtung (35) entgegengesetzt ist.

7. Befestigungsanordnung nach einem der Ansprüche 1 und 2, **dadurch gekennzeichnet, dass** der Keil (20) eine Ausstülpung (43) in Kontakt mit einer ersten Sekundärkante (44) einer zweiten Offnung (42) des Zwischenträgers (4) aufweist, die die Bewegung des Zwischenträgers (4) relativ zu der Befestigungsvorrichtung (2) in einer ersten Tertiärrichtung (35) einer dritten Richtung (29) blockiert, die sich von der ersten Richtung (23) und der zweiten Richtung (28) unterscheidet, sodass ein Bruch der Vorrichtung (2) verhindert wird, wenn die Kraft in dieser ersten Richtung (3) ausgeübt wird 5) tertiär der dritten Richtung (29).

8. Befestigungsanordnung nach dem vorhergehenden Anspruch, **dadurch gekennzeichnet, dass** der Vorsprung (43) in Kontakt mit einem zweiten Sekundärrand (45) der zweiten Öffnung (42) steht, der die Verschiebung des Trägers (4) zwischen der Befestigungsvorrichtung (2) in einer zweiten Tertiärrichtung (37) der dritten Richtung (29) blockiert, wobei die zweite Tertiärrichtung (37) der ersten Tertiärrichtung (35) entgegengesetzt ist, sodass ein Bruch der Vorrichtung (2) verhindert wird, wenn die Kraft in dieser zweiten Tertiärrichtung (37) der dritten Richtung (29) ausgeübt wird, und Die Verbindungseinrichtung (2) mit dem Zwischenträger (4) wird in der dritten Richtung (29) indexiert.

9. Befestigungsanordnung nach einem der vorhergehenden Ansprüche, **dadurch gekennzeichnet, dass** der Zwischenträger (4) Teil eines Karosserieteils (3) ist, das das Karosserieteil (5) aufweist, das an dem Karosserieteil (6) zu befestigen ist.

10. Fahrzeug (1) mit einer Befestigungsvorrichtung nach einem der vorhergehenden Ansprüche.

11. Fahrzeug (1) nach dem vorhergehenden Anspruch, **dadurch gekennzeichnet, dass** das Karosserieteil (5) des Fahrzeugs eine Karosserieplatte ist.

12. Fahrzeug (1) nach dem vorhergehenden Anspruch, **dadurch gekennzeichnet, dass** das Karosserieteil (5) des Fahrzeugs ein vorderer Flügel des Fahrzeugs ist.

13. Fahrzeug (1) nach dem vorhergehenden Anspruch, **dadurch gekennzeichnet, dass** das Element der Fahrzeugkarosserie (6) eine vordere Trage ist.

## Claims

1. Assembly for fastening a bodywork part (5) to a body part (6) of a vehicle, comprising:
- an intermediate support (4) for receiving the body part (5),
- a connecting device (2) on which the intermediate support (4) is fixed, this connecting device (2) comprising a first connecting zone (7) receiving fixing means (8) fixing the connecting device (2) to the intermediate support (4), a second connecting zone (9) receiving fixing means (8) for fixing the connecting device (2) to the body element (6) of the vehicle (1), a fuse (10) intended to break the connecting device (2) according to a breaking zone (11) defined by the fuse (10), separating the first zone (7) from the connecting device (1) 2), under the effect of a force applied by the intermediate support (4) to the first zone (7),
the device (2) comprising a contact surface (22) against which the intermediate support (4) bears, perpendicular to a first direction (23), the contact surface (22) extending at least outside the first zone (7), the contact surface (22) preventing the connection device (2) from breaking when a force is applied by the intermediate support (4) in the first direction (23) and a first primary direction (24) of said first direction (23) directed from the intermediate support (4) towards the connection device (2), **characterized in that** the fixing device (2) comprises a shim (20) supporting the intermediate support (4) in a first secondary direction (27) of a second direction (28) different from the first direction (23), this shim (20) being outside the breaking zone (11) and blocking the movement of the intermediate support (4) relative to the device (2) in the first secondary direction (27) of the second direction (28), in order to prevent the breaking of the connecting device (2) when the force applied by the intermediate support (4) to the fixing device (2) is in the first secondary direction (27) the second direction (28).

2. Fastening assembly according to Claim 1, **characterized in that** the fuse (10) comprises a tab (14) delimiting the breaking zone (11), the tab (14) being arranged in a third direction (29), different from the first direction (23) and the second direction (28), so as to prevent the device (2) from breaking when the force is applied by the intermediate support (4) in the third direction (29).

3. A fastening assembly according to the preceding claim, **characterized in that** the shim (20) comprises a first member (25) in contact with a first primary edge (34) of a first slot (30) of the intermediate support (4), blocking the movement of the intermediate support (4) relative to the fastening device (2) in a first tertiary direction (35) of the third direction (29), different from the first direction (23) and the second direction (28), so as to prevent the device (2) from breaking when the force is applied in this first tertiary direction (35) of the third direction (29.

4. A fastener assembly according to the preceding claim, **characterized in that** the first member (25) is configured to contact a second primary edge (36) of the first lumen (30), blocking movement of the intermediate support (4) relative to the device (2) in a second tertiary direction (37) of the third direction (29), so as to prevent rupture of the device (2) when the force is applied in this second tertiary direction (37) of the third direction (29), and to index the device (2) for connection with the intermediate support (4) in the third direction (29), The second tertiary direction (37) is opposite to the first tertiary direction (35).

5. A fastening assembly according to any one of claims 1 to 4, **characterized in that** the shim (20) comprises a second member (38) in contact with a first side (39) of the intermediate support (4), blocking the movement of the intermediate support (4) relative to the device (2) in a first tertiary direction (35) of a third direction (29), different from the first direction (23) and the second direction (28), so as to prevent the device (2) from breaking when the force is applied in this first tertiary direction (35) of a third direction (29) ), different from the first direction (23) and the second direction (28).

6. Fixing assembly according to the preceding claim, **characterized in that** the shim (20) comprises a third element (40) in contact with a second side (41) of the intermediate support (4), blocking the movement of the intermediate support (4) with respect to the device (2) in a second tertiary direction (37) of the third direction (29), so as to prevent the device (2) from breaking when the force is applied in a second tertiary direction (37) of the third direction (29), and to index the device (2) for connection with the intermediate support (4) in the third direction (29) ), the second tertiary direction (37) being opposite the first tertiary direction (35).

7. A fastening assembly according to any one of claims 1 and 2, **characterized in that** the shim (20) comprises a protuberance (43) in contact with a first secondary edge (44) of a second slot (42) of the intermediate support (4), blocking the movement of the intermediate support (4) relative to the fastening device (2) in a first tertiary direction (35) of a third direction (29), different from the first direction (23) and the second direction (28), so as to prevent the device (2) from breaking when the force is applied in this first direction (3) 5) third direction (29)

8. A fastening assembly according to the preceding claim, **characterized in that** the protuberance (43) is in contact with a second secondary edge (45) of the second slot (42), blocking the movement of the intermediate support (4) with respect to the fastening device (2) in a second tertiary direction (37) of the third direction (29), the second tertiary direction (37) being opposite to the first tertiary direction (35), so as to prevent the rupture of said device (2) when the force is applied in this second tertiary direction (37) of the third direction (29), and to index the device (2) for connection with the intermediate support (4) in the third direction (29).

9. Fastening assembly according to any one of the preceding claims, **characterized in that** the intermediate support (4) is part of a body element (3) comprising the body part (5) to be fastened to the body element (6).

10. A vehicle (1) comprising a fastening assembly according to any preceding claim.

11. Vehicle (1) according to the preceding claim, **characterized in that** the vehicle body part (5) is a body panel.

12. Vehicle (1) according to the preceding claim, **characterized in that** the vehicle body part (5) is a front wing of the vehicle.

13. Vehicle (1) according to the preceding claim, **characterized in that** the body part of the vehicle (6) is a front stretcher.
